Europäisches Patentamt

European Patent Office

Office européen des brevets

(11) Numéro de publication: **0 433 513 A1**

## DEMANDE DE BREVET EUROPEEN

(21) Numéro de dépôt: **89403548.4**

(22) Date de dépôt: **19.12.89**

(51) Int. Cl.5: **F16B 11/00**

(43) Date de publication de la demande:
**26.06.91 Bulletin 91/26**

(84) Etats contractants désignés:
**AT BE CH DE ES GB GR IT LI LU NL SE**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06(FR)**

(72) Inventeur: **Gilibert, Yvon**
**11 Rue Eugène Delacroix La Neuvillette**
**F-51500 Reims(FR)**

(74) Mandataire: **Bruder, Michel et al**
**Cabinet Michel Bruder Conseil en Brevets**
**10, rue de la Pépinière**
**F-75008 Paris(FR)**

(54) **Procédé d'assemblage, par collage, de deux pièces ou substrats.**

(57) La présente invention concerne un procédé d'assemblage, par collage, de deux pièces ou substrats (1,2).

Le procédé est caractérisé en ce qu'on prévoit au moins deux entretoises (3,4), d'épaisseurs (e) rigoureusement égales et constantes sur toutes leurs longueurs, entre les deux surfaces ou subjectiles (1c,2c) en regard des deux substrats (1,2) à assembler, on place une couche adhésive (5,9) entre les subjectiles (1c,2c) et entre les entretoises (3,4), on applique les deux substrats (1,2) l'un contre l'autre, avec les entretoises (3,4) interposées entre les subjectiles (1c,2c), de façon à enfermer entre les subjectiles (1c,2c) et les entretoises (3,4) la couche adhésive (5,9) d'épaisseur (e) rigoureusement égale à celle des entretoises (3,4), et, après durcissement de la couche formant le joint adhésif (5,9), on découpe les parties des substrats (1,2) voisines des entretoises (3,4).

Fig. 1

La présente invention se rapporte à un procédé d'assemblage, par collage, de deux pièces ou substrats permettant d'obtenir une épaisseur rigoureusement constante du joint adhésif formé entre les deux substrats.

L'assemblage par collage de pièces en matériaux divers, métalliques ou non, est une opération extrêmement fréquente mais c'est une opération difficile si l'on veut obtenir un joint adhésif présentant toute garantie de résistance aux contraintes mécaniques. Pour atteindre ces conditions il est indispensable que le joint soit d'une épaisseur rigoureusement constante sur pratiquement toute sa surface, à l'exception éventuellement de ses extrémités.

La présente invention a donc pour but de fournir un procédé d'assemblage qui permet d'obtenir une épaisseur rigoureusement constante du joint adhésif formé entre les deux substrats à assembler. Pour atteindre ce but, ce procédé d'assemblage par collage de deux pièces ou substrats est caractérisé en ce qu'on prévoit au moins deux entretoises, d'épaisseurs rigoureusement égales et constantes sur toutes leurs longueurs, entre les deux surfaces ou subjectiles en regard des deux substrats à assembler, on place une couche adhésive entre les subjectiles et entre les entretoises, on applique les deux substrats l'un contre l'autre, avec les entretoises interposées entre les subjectiles, de façon à enfermer entre les subjectiles et les entretoises la couche adhésive en lui donnant une épaisseur rigoureusement constante égale à celle des entretoises, et, après durcissement de la couche formant le joint adhésif, on découpe les parties des substrats voisines des entretoises, sur une largeur suffisante pour faire disparaître les entretoises des deux substrats collés.

Il s'agit donc d'un procédé d'assemblage à entretoises perdues, lesquelles, par leurs épaisseurs rigoureusement constantes et identiques, permettent, pendant le durcissement du joint adhésif, le maintien d'un écartement précis et constant des subjectiles des deux substrats et l'obtention finale d'un joint adhésif d'épaisseur constante pratiquement sur toute son étendue, c'est-à-dire sauf éventuellement à ses extrémités.

Les entretoises peuvent être des éléments rapportés fixés préalablement avant, la mise en place de la couche adhésive, sur l'un ou l'autre des substrats, et elles peuvent également être fixées l'une sur l'un des substrats et l'autre sur l'autre substrat. Les entretoises sont fixées sur les subjectiles des substrats par tous moyens apropriés par exemple par collage. Elles sont préférentiellement constituées de fils métalliques parfaitement calibrés en diamètre ou de morceaux de clinquant.

Suivant une variante les entretoises peuvent aussi faire partie intégrante de l'un des substrats.

La couche adhésive qui est mise en place entre les substrats et les entretoises peut être de toute nature appropriée. Elle peut être notamment constituée par une couche de colle et dans ce cas les deux substrats sont préalablement encollés entre les entretoises, avant la mise sous pression de l'ensemble. La couche adhésive peut être aussi constituée par un "mat" imprégné d'adhésif ou encore un film de matière plastique revêtu d'une couche adhésive sur chacune de ces faces.

On décrira ci-après, à titre d'exemples non limitatifs, diverses formes d'exécution de la présente invention, en référence au dessin annexé sur lequel :

La figure 1 est une vue en coupe de deux substrats représentés en position d'assemblage par le procédé suivant l'invention, avant l'élimination des entretoises réalisées sous la forme d'éléments indépendants rapportés.

La figure 2 est une vue en coupe similaire des deux substrats collés de la figure 1 après élimination des entretoises.

La figure 3 est une vue en coupe illustrant une variante de mise en oeuvre du procédé selon l'invention dans un assemblage dit à double recouvrement, avant élimination des entretoises.

La figure 4 est une vue en coupe des deux substrats collés de la figure 3, après élimination des entretoises.

La figure 5 est une vue en coupe partielle de deux substrats appliqués l'un contre l'autre, pendant le durcissement du joint de colle, par l'intermédiaire d'entretoises faisant partie de l'un des substrats.

La figure 6 est une vue en coupe partielle des deux substrats collés de la figure 5, après élimination des entretoises.

La figure 7 est une vue en coupe partielle d'une autre variante d'exécution d'un assemblage de deux substrats avec une entretoise adhérant à l'un des substrats.

Les figures 8, 9 et 10 sont des vues en coupe de divers assemblages pouvant être réalisés par le procédé suivant l'invention, et de diverses formes des joints de colle.

Les figures 11 et 12 sont des vues en coupe illustrant une variante de mise en oeuvre du procédé suivant l'invention, respectivement avant et après mise en pression des deux substrats l'un contre l'autre.

Les figures 13 et 14 sont des vues en coupe d'une autre variante de réalisation des entretoises respectivement avant et après collage.

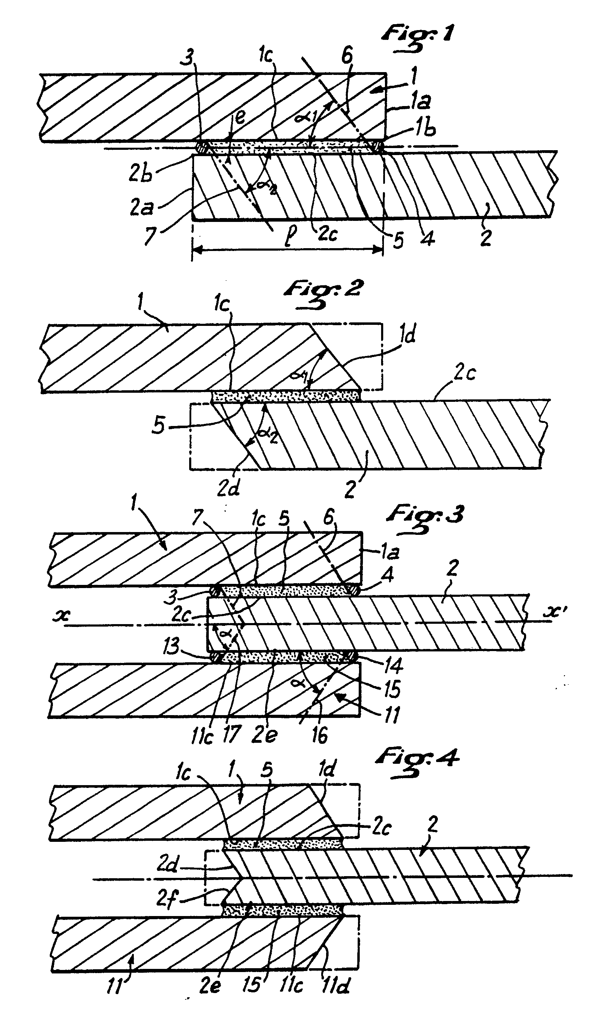

Sur la figure 1 représente le mode principal de réalisation du procédé suivant l'invention, lequel est appliqué à l'assemblage de deux pièces ou substrats horizontaux 1 et 2, de forme parallélépipèdique, de section carrée ou rectangulaire, les deux substrats pouvant avoir des sections égales ou de dimensions différentes. Le substrat supérieur 1 recouvre partiellement, sur une distance 1, le substrat inférieur 2, son bord vertical 1a avec son arête inférieure 1b étant, de ce fait, situé à la distance 1 du bord vertical 2a et de l'arête supérieure 2b du substrat inférieur 2. Il s'agit donc d'un assemblage à chevauchement des bords, le bord 1a du substrat 1 chevauchant le bord 2a du substrat 2. Dans cette position, d'assemblage les deux substrats 1,2 présentent des surfaces parallèles 1c,2c en regard l'une de l'autre, lesquelles sont destinées à être encollées, ces surfaces 1c,2c étant appelées aussi subjectiles. Entre ces subjectiles 1c,2c sont interposées des entretoises 3,4 de mêmes épaisseurs e sur toutes leurs longueurs. Les subjectiles 1c,2c, et les entretoises 3,4 immobilisées entre les deux subjectiles 1c,2c, définissent conjointement un volume parallélépipèdique contenant un joint de colle 5 d'épaisseur constante e égale à l'épaisseur des entretoises 3, 4. Dans la forme d'exécution non limitative représentée sur la figure 1, les entretoises 3,4 sont des pièces indépendantes rectilignes qui sont fixées au voisinage des arêtes 1b,2b, et des bords 1a, 2a des deux substrats 1,2.

Les entretoises 3,4 peuvent être constituées par des éléments cylindriques de même diamètre, tels que des fils ou câbles métalliques, par des morceaux de clinquant etc.. Ces entretoises sont fixées sur les subjectiles par collage, de manière connue en soi, ou de toute autre manière. Les entretoises 3, 4 peuvent être préalablement fixées toutes les deux sur l'un des subjectiles 1c ou 2c ou bien encore on peut également fixer l'une des entretoises 4 sur le subjectile 1c du substrat supérieur 1, près de son bord libre vertical 1a, (ou encore sur le subjectile 2c du substrat inférieur 2, à distance de son bord libre vertical 2a) et l'autre entretoise 3 sur le subjectile 2c du substrat inférieur 2, près de son bord libre vertical 2a (ou encore sur le subjectile 1c du substrat supérieur 1, à distance de son bord libre vertical 1a).

Les surfaces d'assemblage ou surfaces actives des subjectiles 1c,2c sont ensuite encollées entre les entretoises 3,4, avant d'appliquer les substrats l'un contre l'autre dans la position représentée sur la figure 1. Une fois réalisé le collage des substrats 1 et 2, c'est-à-dire après durcissement du joint de colle 5 on enlève les entretoises 3,4 par découpe dans la masse des substrats 1,2 et du joint de colle 5 selon des plans de découpe 6,7 représentés sur la figure 1.

Cette opération de découpe des extrémités des substrats 1,2 suivant les plans 6,7 est réalisée préférentiellement en biseau. L'angle $\alpha$1 du plan de découpe 6 par rapport au plan du substrat 1 et l'angle $\alpha$2 du plan de découpe 7 par rapport au plan du substrat 2 peuvent être quelconques et ils sont choisis en fonction de la forme des bords assemblés. De préférence ces découpes seront exécutées avec des angles $\alpha$1 et $\alpha$2 compris entre 30 et 60° pour une meilleure continuité de la section de l'assemblage d'un substrat à l'autre. Après l'opération de découpe les substrats collés 1,2 se présentent tels qu'illustrés sur la figure 2 et ils comportent alors des bords 1d,2d en biseau.

La découpe peut être réalisée au moyen d'un faisceau laser selon un procédé et au moyen d'un dispositif connus en eux-mêmes. Le procédé suivant l'invention exigeant une grande précision de la découpe, on utilise de préférence un laser $CO_2$ pour la découpe des aciers et matériaux organiques et un laser à source YAG dans le cas de métaux à forte réflexion, comme le cuivre ou l'aluminium. Dans tous les cas il convient de rechercher une grande précision de découpe pour une puissance limitée et par conséquent pour des épaisseurs ou des vitesses plus faibles le laser à source YAG est préféré. Pour les substrats de faible épaisseur on peut utiliser à la fois la technique de la découpe par laser et la technique de la découpe par jet d'eau à très haute pression, d'épaisseur constante. L'eau constituant ce jet sous pression peut être de l'eau pure, de l'eau chargée de polymères ou encore de l'eau chargée d'abrasifs. On peut également utiliser, pour l'opération de découpe, d'autres procédés d'usinage chimique ou par électro-érosion qui permettent également d'obtenir une grande précision et sans choc pour la structure.

Sur la figure 3, est représenté un assemblage à double recouvrement obtenu selon la technique d'assemblage décrite ci-dessus en référence à l'assemblage de la figure 1. Selon cet assemblage à double recouvrement ou encore à double chevauchement, deux substrats 1 et 11 recouvrent partiellement un substrat intermédiaire 2. Les entretoises 3 et 4 définissent, avec le subjectile inférieur 1c du substrat supérieur 1 et le subjectile supérieur 2c du substrat intermédiaire 2, un premier joint de colle 5 obtenu selon le procédé décrit ci-dessus pour l'assemblage représenté sur la figure 1. Deux autres entretoises 13 et 14 définissent, avec le subjectile supérieur 11c du substrat inférieur 11 et le subjectile inférieur 2e du substrat intermédiaire 2, un second joint de colle 15, obtenu également selon le même procédé. Les découpes pratiquées dans les substrats 1,2,11 sont représentées par les plans de découpe eux-mêmes représentés par les lignes 6,7,16,17 de la figure 3. Ces découpes sont d'une profondeur suffisante dans les substrats 1,2,11 et dans les joints de colle 5,15 pour éliminer les entretoises 3,4,13,14. Les plans de découpe sont inclinés d'un angle $\alpha$ par rapport aux substrats parallèles 1,2,11, cet angle $\alpha$ ayant la même valeur pour tous les plans de découpe ou des valeurs différentes. Après l'opération de découpe le substrat intermédiaire 2 présente un bord 2d,2f ayant en coupe, la forme d'un chevron ou d'un V, les deux autres substrats 1,11 ayant des bords en biseau respectifs 1d, 11d.

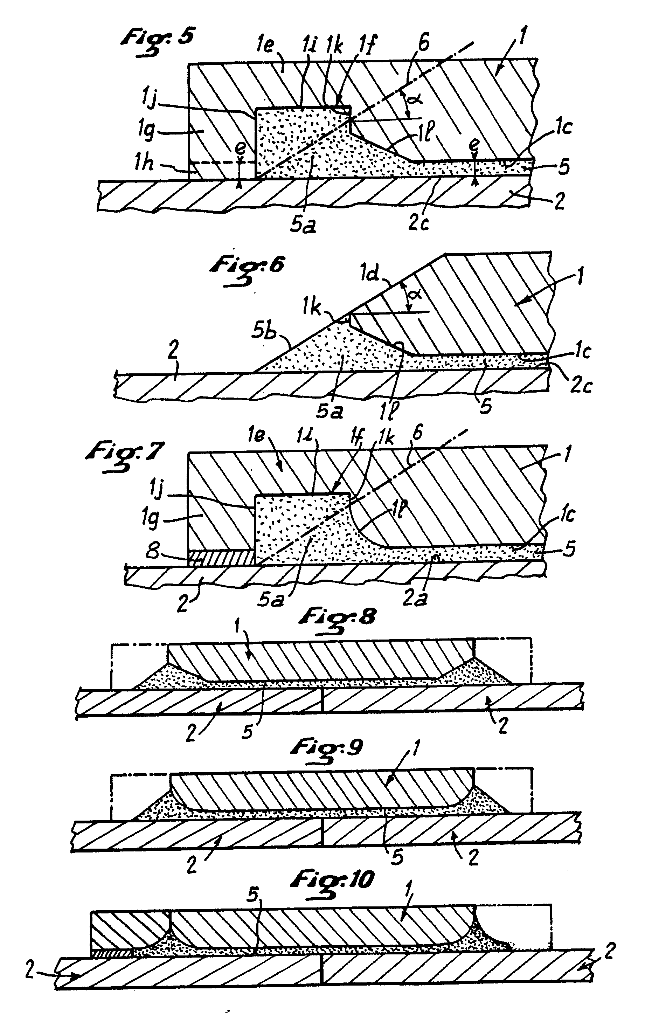

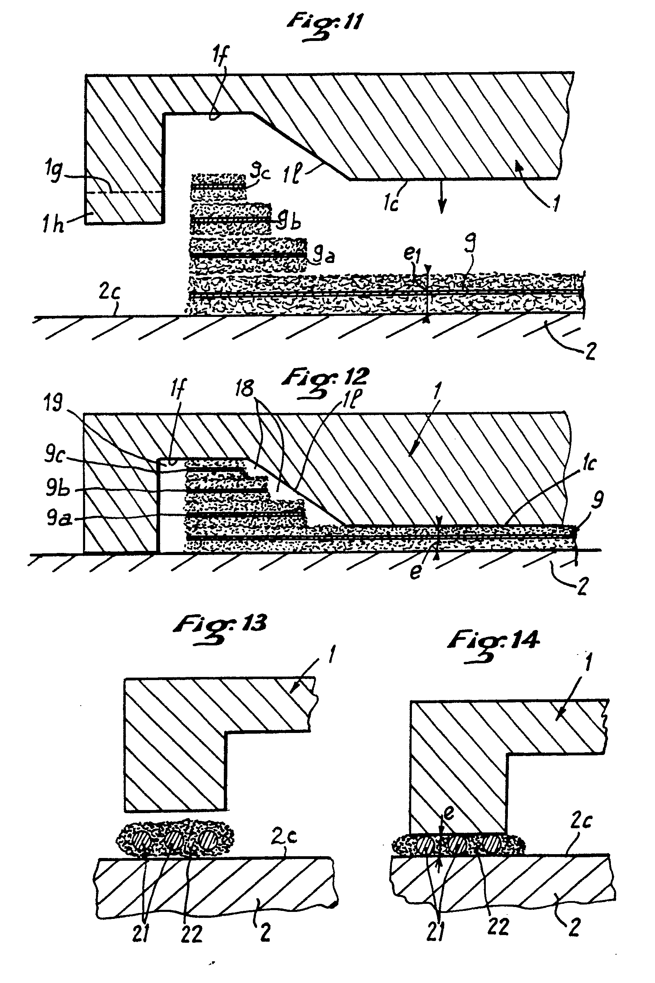

Les figures 5 et 6 représentent une variante d'exécution du procédé suivant l'invention dans lequel on utilise un substrat supérieur 1 qui comprend une partie latérale ou extérieure 1e d'épaisseur réduite obtenue par formation, d'un évidement 1f dans le subjectile 1c. Cette partie latérale 1e qui est destinée à être éliminée ultérieurement par l'opération de découpe, comprend une branche extrême 1g qui s'étend perpendiculairement au plan du subjectile 1c et au delà de ce plan en constituant une section 1h sur une distance e. Cette section en saillie 1h d'épaisseur e constitue dans ce cas une entretoise qui fait partie intégrante du substrat 1. Du fait de la prévision de la gorge 1f, le joint de colle 5, d'épaisseur e entre les subjectiles 1c,2c des substrats respectifs 1,2 présente une partie extrême 5a de plus grande épaisseur et qui correspond à la masse de colle remplissant l'évidement 1f. Cet évidement 1f est délimité par un fond horizontal supérieur 1i, une face verticale externe 1j, s'étendant sur toute la hauteur de la branche extrême 1g jusqu'au contact avec le subjectile 2c, une face verticale interne 1k, de petite hauteur, s'étendant vers le bas à partir du fond 1i et qui se raccorde au subjectile proprement dit 1c par une face intermédiaire 1l inclinée d'un angle aigu par rapport au subjectile 1c. Le plan de découpe 6 passe, comme on peut le voir sur la figure 5, sensiblement par le milieu de la face verticale interne 1k et par l'arête inférieure de la face verticale externe 1j par laquelle celle-ci est en contact avec le subjectile 2c. Après l'opération de découpe l'assemblage se présente tel qu'illustré sur la figure 6 et on peut voir que le joint de colle 5 est prolongée latéralement, à son extrémité, par une partie plus épaisse 5a dont la surface 5b est inclinée de l'angle α par rapport au subjectile 2c et est coplanaire avec le bord supérieur en biseau 1d du substrat supérieur 1.

La figure 7 illustre une variante d'exécution dans laquelle la branche extrême 1g du substrat 1 se termine par une face frontale située dans le plan du subjectile 1c et sur cette face frontale est collée une entretoise 8, d'épaisseur e, laquelle est constituée par un bloc parallélépipèdique. Par ailleurs la figure 7 montre également que dans ce cas la face intermédiaire 11, entre le subjectile 1c et la face verticale interne 1k, a une forme courbe à convexité tournée vers le substrat inférieur 2.

Avec les assemblages réalisés ainsi qu'il est représenté sur les figures 5 à 7 on obtient une combinaison des avantages procurés par le biseautage de la face 1d du substrat 1, et du renforcement de l'extrémité du joint 5 par la surépaisseur 5a. Naturellement cette extrémité finie peut prendre toutes les formes qui engendrent la normalisation des surcontraintes d'extrémité (décollement) ou de voisinage (cisaillement). L'angle α du plan de découpe 6 peut varier et il peut être égal à 90°. Dans ce cas le plan de découpe 6 contient la face verticale interne 1k et la partie extrême du joint 5 est limitée à la masse de colle se trouvant entre la face intermédiaire 1l et le subjectile 2c.

Les figures 8,9,10 illustrent diverses formes d'assemblages qui peuvent être obtenus par le procédé suivant l'invention. Sur ces figures sont représentés deux substrats 2, de même épaisseur, qui sont maintenus aboutés au moyen d'un substrat supérieur 1 s'étendant à cheval au-dessus du plan de jonction des deux substrats inférieurs 2 et collé aux faces supérieures de ceux-ci.

D'autres formes de substrats assemblés peuvent entrer dans le domaine d'application du procédé décrit. Il en est ainsi de substrats dont les surfaces assemblées ne sont pas planes, mais toutefois parallèles en regard l'une de l'autre. D'autres formes de substrat ou d'autres formes d'extrémités des substrats peuvent être envisagées, l'assemblage par entretoises amovibles nécessitant l'accès, pour la découpe par faisceau laser ou par jet d'eau à très forte pression, aux zones dans lesquelles sont situées les entretoises après l'assemblage, de manière à procéder à l'enlèvement de ces entretoises. Ces deux procédés peuvent être également utilisés en combinaison. La découpe par faisceau laser permet de s'arrêter avec précision dans le joint de colle en un endroit prédéterminé quelconque. Par contre si on utilise une découpe par jet d'eau sous pression, ce jet d'eau doit nécessairement déboucher. Les appareils disponibles actuellement en robotique permettent d'assurer facilement l'utilisation de ces deux types de découpes en combinaison.

Dans les formes d'exécution ci-dessus décrites les substrats sont assemblés par des joints de colle. Le procédé selon la présente invention peut toutefois être également réalisé au moyen de "mats" préalablement encollés ou de films adhésifs double face, ces mats ou films étant logés dans les espaces de profondeur constante constitués entre les subjectiles, l'épaisseur du mat ou du film étant alors ramenée à une épaisseur rigoureusement constante après l'application par pression des deux substrats l'un contre l'autre.

Dans la variante d'exécution représentée sur les figures 11 et 12, les deux substrats 1,2 sont collés l'un à l'autre au moyen d'un film adhésif double face 9 lequel comprend, de la manière conventionnelle, un film central en matière plastique qui est recouvert de couches d'adhésif sur ses deux faces. Ce film adhésif 9 a normalement, au repos, une épaisseur e1 qui est supérieure à l'épaisseur e du joint adhésif final obtenu après application des substrats 1,2 l'un contre l'autre. Dans l'évidement 1f qui est formé dans la partie latérale du subjectile 1c du substrat 1 sont logés plusieurs morceaux de film adhésif double face superposés 9a,9b,9c, ces morceaux étant en nombre suffisant pour remplir la profondeur de l'évidement 1f. Ces morceaux sont superposés d'une manière étagée, en escalier, de manière à laisser des espaces libre de part et d'autre de chacun d'eux, lorsqu'ils sont comprimés entre les deux substrats 1,2. Ces espaces libres sont constitués par des espaces internes 18 délimités entre les extrémités décalées des morceaux de film 9a,9b,9c et la face intermédiaire inclinée 11, et un espace externe 19 qui est délimité entre les extrémités externes, alignées verticalement, des morceaux de film 9a,9b,9c et la face verticale 1j de la branche externe 1g. Les espaces internes 10 et l'espace externe 11 permettent de recueillir les bavures de colle qui sont produites lors de la mise en pression des deux substrats 1,2 l'un contre l'autre. Le durcissement de l'ensemble adhésif constitué par le film adhésif double face 9 et les morceaux de films adhésifs 1a,9b,9c, superposés dans la partie latérale, est obtenu par pression à froid. Dans le cas où l'on utilise un "mat" imprégné d'adhésif, on effectue la polymérisation à chaud. Dans tous les cas on obtient, du fait du maintien d'un intervalle e de largeur précise et constante entre les subjectiles 1c,2c des substrats 1,2, une répartition uniforme de la pression sur la totalité de la surface du joint adhésif 9.

Les figures 13 et 14 illustrent une variante d'exécution dans laquelle on utilise, pour constituer les entretoises, des billes calibrées rigides 21, de même diamètre, noyées dans un mastic de maintien 22. Après application sans pression des deux substrats 1 et 2 l'un contre l'autre, le mastic fluide 22 est chassé latéralement et les billes calibrées rigides 21 sont alors en contact direct avec les subjectiles des substrats 1,2, en maintenant rigoureusement l'espacement e qui, dans ce cas, correspond au diamètre des billes 21.

## Revendications

1.- Procédé d'assemblage, par collage, de deux pièces ou substrats (1,2) caractérisé en ce qu'on prévoit au moins deux entretoises (3,4), d'épaisseurs (e) rigoureusement égales et constantes sur toutes leurs longueurs, entre les deux surfaces ou subjectiles (1c,2c) en regard des deux substrats (1,2) à assembler, on place une couche adhésive (5,9) entre les subjectiles (1c,2c) et entre les entretoises (3,4), on applique les deux substrats (1,2) l'un contre l'autre, avec les entretoises (3,4) interposées entre les subjectiles (1c, 2c), de façon à enfermer entre les subjectiles (1c, 2c) et les entretoises (3,4) la couche adhésive (5,9) d'épaisseur (e) rigoureusement égale à celle des entretoises (3,4), et, après durcissement de la couche formant le joint adhésif (5,9), on découpe les parties des substrats (1,2) voisines des entretoises (3,4) sur une largeur suffisante pour faire disparaître les entretoises (3,4) des deux substrats collés (1,2).

2.- Procédé selon la revendication 1 caractérisé en ce qu'on utilise, comme entretoises (3,4), des éléments rapportés fixés préalablement, par exemple par collage, sur l'un et/ou l'autre des subjectiles (1c, 2c) des substrats (1,2).

3.- Procédé selon l'une quelconque des revendications 1 et 2 caractérisé en ce qu'on utilise des entretoises (3,4) constituées par des fils métalliques parfaitement calibrés en diamètre.

4.- Procédé suivant l'une quelconque des revendications 1 et 2 caractérisé en ce qu'on utilise des entretoises (3,4) constituées par des morceaux de clinquant.

5.- Procédé suivant l'une quelconque des revendications 1 et 2 caractérisé en ce qu'on utilise des entretoises (21) constituées par des billes rigides calibrées, de même diamètre, noyées dans un mastic de maintien (22).

6.- Procédé suivant l'une quelconque des revendications précédentes caractérisé en ce qu'on découpe les substrats (1,2) suivant des plans (6,7) inclinés par rapport aux substrats (1,2) de manière à obtenir des bords (1d,2d) en biseau des substrats collés, après élimination des entretoises (3,4).

7.- Procédé suivant l'une quelconque des revendications 1 à 6 caractérisé en ce qu'on forme, à l'extrémité d'un substrat (1), une branche extrême (1g) séparée du reste du substrat par un évidement (1f) formé dans le subjectile (1c) et contenant une masse d'adhésif (5a;9a-9c) constituant une surépaisseur du joint (5,9), cette branche extrême (1g) étant éliminée, après durcissement de l'adhésif, par l'opération de découpe.

8.- Procédé suivant la revendication 7 caractérisé en ce qu'on forme une branche extrême (1g) qui s'étend au-delà du plan du subjectile (1c) en constituant une section en saillie ou entretoise (1h) éliminée, après durcissement de l'adhésif, par l'opération de découpe.

9.- Procédé suivant la revendication 6 caractérisé en ce qu'on forme une branche extrême (1g) qui se termine par une face frontale située dans le plan du subjectile (1c) et on colle, sur cette face frontale, une entretoise (8), d'épaisseur constante (e), laquelle est constituée par un bloc parallélépipèdique.

10.- Procédé suivant l'une quelconque des revendications 1 à 9 caractérisé en ce qu'on encolle préalablement les subjectiles (1c,2c) entre les entretoises (3,4), avant d'appliquer les deux substrats (1,2) l'un contre l'autre.

11.- Procédé suivant l'une quelconque des revendications 1 à 9 caractérisé en ce qu'on interpose, entre les subjectiles (1c,2c) des substrats (1,2), une bande adhésive (9), constituée par un film adhésif double face ou un mat imprégné d'adhésif, d'épaisseur (e1) supérieure à l'épaisseur (e) des entretoises et par conséquent du joint adhésif final, si bien que la bande adhésive (9) est mise en compression entre les subjectiles (1c,2c) des substrats (1,2) lorsque ceux-ci sont appliqués sous pression l'un contre l'autre.

12.- Procédé suivant la revendication 11 caractérisé en ce qu'on forme latéralement un évidement (1f) dans le subjectile (1c) de l'un des substrats (1) et on constitue, en regard de cet évidement (1f), une surépaisseur de la bande adhésive (9) constituée par des morceaux de bande adhésive (9a,9b,9c) superposés de manière à avoir une épaisseur totale des morceaux de bande adhésive superposés supérieure à la profondeur de l'évidement (1f), si bien que les morceaux de bande adhésive superposés (9a,9b,9c) sont comprimés lors de la mise en pression des deux substrats (1,2) l'un contre l'autre.

13.- Procédé suivant la revendication 12 caractérisé en ce qu'on ménage des espaces libres (10,11) entre les extrémités des morceaux de bande adhésive superposés (9a,9b,9c) et les faces en regard du substrat (1), pour permettre aux bavures de colle, se produisant lors de la mise en pression des substrats (1,2) l'un sur l'autre, de s'écouler dans ces espaces libres.

14.- Procédé selon l'une quelconque des revendications précédentes caractérisé en ce qu'on réalise les découpes (6,7) au moyen d'un faisceau laser, d'un jet d'eau à très haute pression, par usinage chimique ou électro-érosion ou par une combinaison quelconque de ces procédés.

*Fig. 1*

*Fig. 2*

*Fig. 3*

*Fig. 4*

Fig. 5

Fig. 6

Fig. 7

Fig. 8

Fig. 9

Fig. 10

Fig. 11

Fig. 12

Fig. 13

Fig. 14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2182996 (NISSAN) <br> * abrégé; figures 1a, 18 * <br> --- | 1 | F16B11/00 |
| A | DE-A-2854766 (AUDI NSU) <br> * revendication 1; figures 1-2 * <br> --- | 1 | |
| A | EP-A-0316237 (ARMINES) <br> * abrégé; figure 1 * <br> --- | 1 | |
| A | DE-A-1575156 (HERTEL) <br> --- | | |
| A | DE-B-1253957 (MATTING) <br> ----- | | |

**DOMAINES TECHNIQUES RECHERCHES (Int. Cl.5)**

F16B
B29C
B32B
C09J

Le présent rapport a été établi pour toutes les revendications

| Lieu de la recherche | Date d'achèvement de la recherche | Examinateur |
|---|---|---|
| BERLIN | 16 JUILLET 1990 | SCHAEFFLER C.A.A. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P0402)